# EUROPEAN PATENT APPLICATION

(11) **EP 2 963 484 A1**
(43) Date of publication of application: **06.01.2016**
(21) Application number: 14757683.9
(22) Date of filing: 14.02.2014
(51) Int. Cl.: G02C 13/00, G02C 7/00, G05B 19/418

(54) **SPECTACLE LENS PRODUCTION SYSTEM, PRODUCTION DEVICE, PRODUCTION METHOD, PRODUCTION INFORMATION MANAGEMENT SYSTEM, PRODUCTION INFORMATION MANAGEMENT DEVICE, AND PRODUCTION INFORMATION MANAGEMENT METHOD**

(30) Priority: 26.02.2013 JP 2013036123
(71) Applicant: HOYA Corporation, Tokyo 161-8525 (JP)
(72) Inventor: SUZUE Takahiro, Tokyo 161-8525 (JP); YOSHIZAKI Hiroshi, Tokyo 161-8525 (JP)
(74) Representative: Betten & Resch
(86) International application number: PCT/JP2014/053413
(87) International publication number: WO 2014/132811

(57) **Abstract**

There is provided a spectacle lens manufacturing system, including: an edger installed at a manufacturing side of a spectacle lens; an edging information acquisition part configured to acquire edging information calculated in consideration of a lens deformation amount between a case when a spectacle lens is present in an ordering side environment and a case when a spectacle lens is present in a manufacturing side environment, based on request side information such as spectacle lens information, frame information, prescription value information, and ordering side area information for requesting to manufacture the spectacle lens, and manufacturing side information of a spectacle lens including edger information, environment information such as environment information at an ordering side of the spectacle lens and such as environment information at a manufacturing side of the spectacle lens, and lens deformation information regarding a deformation of a lens according to an environment, wherein the spectacle lens is manufactured by the edger under a manufacturing side environment so that the spectacle lens is fitted into a frame even under an ordering side environment, in accordance with edging information transmitted to the edger from the edging information acquisition part.

## Description

### Technical Field

The present invention relates to a spectacle lens manufacturing system, a spectacle lens manufacturing device, a spectacle lens manufacturing method, a manufacturing information management system of a spectacle lens, a manufacturing information management device of a spectacle lens, and a manufacturing information management method of a spectacle lens.

### Description of Related Art

Usually, a client who is planning a purchase of spectacles visits to a spectacle shop, and orders a desired spectacle in the spectacle shop. Then, the spectacle shop reports an order content to a spectacle lens manufacturing party (simply called a "manufacturing party" hereafter), and orders the spectacle lens to the manufacturing party. Then, the manufacturing party manufactures the spectacle lens based on the order content, and delivers the spectacle lens to the spectacle shop. Then, the spectacle lens is framed into a spectacle frame (frame) to complete the spectacle at the spectacle shop. Finally, there is a mechanism of receiving the spectacle by the client at the spectacle shop.

The client selects a desired frame at the spectacle shop. Then, the spectacle shop operates a frame shape measurement device (simply called a "tracer" hereafter) provided in the spectacle shop, to measure the frame shape. The result is transmitted to the manufacturing party together with a prescription value of the client and the order content. Then, based on the information regarding the order content, the spectacle lens is edged so as to be fitted into the frame. This edging is called an "edging for framing" hereafter. Also, fitting the spectacle lens into the frame is called a "framing".

In order to perform such an edging for framing, a sophisticated technique is required. In addition, due to high difficulty of the edging for framing, the framing cannot be satisfactorily performed after all, and such a case often occurs. Therefore, various techniques have been developed, for the purpose of precisely performing edging for framing, and surely framing a spectacle lens into a spectacle frame, by the manufacturers themselves.

For example, as described in patent document 1, there is known a technique of manufacturing a spectacle lens by the manufacturing party, based on measurement data corrected in consideration of the information regarding a tracer provided at a client side. More specifically, a difference of a size mainly due to the characteristic of a frame material (flexibility of the frame), is corrected from the information regarding the type of the frame out of the order content transmitted from the client side. Then, the relevant correction value is adapted to an edging size of the spectacle lens, to thereby manufacture the spectacle lens. Finally, the spectacle lens is delivered to the spectacle shop, and the spectacle lens is supplied to the client via the spectacle shop.

Further, as described in patent document 2, there is also known a technique of obtaining edging data from an amount of measurement error specific to the tracer, and an amount of measurement error specific to an edger provided separately from the tracer.

### Prior art document

### Patent document

Patent document 1: WO2007/077848
Patent document 2: Japanese Patent Laid Open Publication No.1992-13539

### Summary of the Invention

### Problem to be solved by the Invention

In the technique described in patent document 1, measurement data is corrected, according to the information regarding the tracer, and the type of the frame. Simultaneously, edging data is also corrected separately for the edger, based on the information regarding the edger.

Although the technique of patent document 1 is extremely useful, the framing cannot be surely performed only by the technique of patent document 1, because a business condition of manufacturing the spectacle lens, is remarkably changed. Even in the case of using the amount of error according to the tracer and the edger respectively using the technique of patent document 2, the edging for framing cannot be precisely performed because the business condition of manufacturing a spectacle lens is remarkably changed, and the framing cannot be surely performed after all. Explanation will be given hereafter, with specific examples.

First, when an environment of the spectacle shop (simply called "ordering side" hereafter), and an environment of the manufacturing party (simply called "manufacturing side") are greatly different from each other, framing is sometimes unsatisfactory. As a specific example, there is a case when the ordering side is present in a cold and dry area, and there is also a case when the manufacturing side is present in a hot and humid area. In this case, the ordering side measures the frame shape in a cold and dry condition. Then, of course, the manufacturing side manufactures the spectacle lens based on a measurement result of the frame shape. However, the manufacturing side is present in a hot and humid condition, and therefore a lens before edging is expanded as compared with a lens in a cold and dry condition. Therefore, even if the manufacturing side intends to make the spectacle lens faithfully based on the measurement result of the frame shape, the spectacle lens is not fitted into the frame shape when the spectacle lens delivered to the ordering side that is present in the cold and dry area, and the spectacle lens is not satisfactorily fitted into the spectacle frame.

Even if such a situation is attempted to be overcome by trial and error or by experience so that a delicate edging for framing can be performed, when an operation stops under an unexpected circumstance at the manufacturing side, it becomes impossible to perform the delicate framing again even if another manufacturing side is prepared.

Currently, globalization of a manufacturing sector has progressed remarkably. Further, request of each client is steadily diversifying. For example, the request regarding an outer appearance of the frame or a framing method, is diversifying. On the other hand, with a progress of an information network, it is requested to speedily manufacture a product, regardless of a change of the situation. Under such a circumstance, if the delicate edging for framing and the framing can be performed only by a specific ordering side and a specific manufacturing side, it is impossible to speedily respond to a variety of customer's needs, resulting in a situation that the manufacturing side has a great loss in an international competitiveness.

Therefore, a main object of the present invention is to globally and speedily provide a spectacle lens that can be framed into a spectacle frame satisfactorily, regardless of the locations of the ordering side and the manufacturing side of the spectacle lens.

### Means for solving the Problem

An inventor of the present invention examines a method for solving the above-described problem. As a result, it is found that edging information is obtained, which is a base of manufacturing a spectacle lens at a manufacturing side, in consideration of a difference between an ordering side environment and a manufacturing side environment.

The present invention is provided based on the abovementioned knowledge, and the present invention has the following aspects.

A first aspect is a spectacle lens manufacturing system, including:
an edger installed at a manufacturing side of a spectacle lens;
an edging information acquisition part configured to acquire edging information calculated in consideration of a lens deformation amount between a case when a spectacle lens is present in an ordering side environment and a case when a spectacle lens is present in a manufacturing side environment, based on request side information such as spectacle lens information, frame information, prescription value information, and ordering side area information for requesting to manufacture the spectacle lens, and manufacturing side information of a spectacle lens including edger information, environment information such as environment information at an ordering side of the spectacle lens and such as environment information at a manufacturing side of the spectacle lens, and lens deformation information regarding a deformation of a lens according to an environment,
wherein the spectacle lens is manufactured by the edger under a manufacturing side environment so that the spectacle lens is fitted into a frame even under an ordering side environment, in accordance with edging information transmitted to the edger from the edging information acquisition part,
wherein the request side of manufacturing a spectacle lens, refers to the ordering side of a spectacle lens, which is a prime contractor when manufacture of the spectacle lens is requested to a subcontractor by the prime contractor who receives an order of the spectacle lens, or refers to the subcontractor when manufacture of the spectacle lens is requested to further another subcontractor by the subcontractor.
A second aspect is the system of the first aspect, wherein the environment information includes information regarding a temperature.

A third aspect is the system of the second aspect, including:
a request side computer installed at the request side of manufacturing the spectacle lens;
a manufacturing side computer installed at the manufacturing side of the spectacle lens;
an environment information acquisition part configured to acquire environment information;
a lens deformation information acquisition part configured to acquire lens deformation information; and
a calculation part configured to calculate edging information,
the request side computer further including:
   a request side transmission part configured to transit ordering side area information to the environment information acquisition part for specifying ordering side environment information, and transmit spectacle lens information to the lens deformation information acquisition part for specifying lens deformation information, and transmit request side information including at least frame information and prescription value information to the calculation part,
   the manufacturing side computer further comprising the edging information acquisition part,
   wherein based on request side information, manufacturing side information, environment information transmitted from the environment information acquisition part, and lens deformation information transmitted from the lens deformation information acquisition part, edging information is transmitted to the edging information acquisition part after being calculated by the calculation part.

A fourth aspect is the system of any one of the first to third aspects, wherein a plurality of the request side computers are provided.

A fifth aspect is a spectacle lens manufacturing device, including:
an edger installed at a manufacturing side of a spectacle lens;
an edging information acquisition part configured to acquire edging information calculated in consideration of a lens deformation amount between a case when a spectacle lens is in an ordering side environment, and a case when a spectacle lens is in a manufacturing side environment, based on request side information to request manufacture of a spectacle lens including spectacle lens information, frame information, prescription value information, and ordering side area information, manufacturing side information of a spectacle lens including edging information, environment information including environment information at an ordering side of a spectacle lens and environment information at a manufacturing side of a spectacle lens, and lens deformation information regarding a deformation of a lens according to an environment,
wherein a spectacle lens is manufactured by the edger under a manufacturing side environment, so that the spectacle lens is fitted into a frame even under an ordering side environment, according to edging information transmitted to the edger from the edging information acquisition part.

A sixth aspect is a manufacturing method of a spectacle lens, for manufacturing a spectacle lens by an edger under a manufacturing side environment, so that the spectacle lens is fitted into a frame even under an ordering side environment, according to edging information calculated in consideration of a lens deformation amount between a case when a spectacle lens is present in an ordering side environment and a case when a spectacle lens is present in a manufacturing side environment, based on request side information such as spectacle lens information, frame information, prescription value information, and ordering side area information for requesting to manufacture the spectacle lens, and manufacturing side information of a spectacle lens including edger information, environment information such as environment information at an ordering side of the spectacle lens and such as environment information at a manufacturing side of the spectacle lens, and lens deformation information regarding a deformation of a lens according to an environment.

A seventh aspect is a manufacturing information management system of a spectacle lens, including:
an edging information acquisition part configured to acquire edging information calculated in consideration of a lens deformation amount between a case when a spectacle lens is present in an ordering side environment and a case when a spectacle lens is present in a manufacturing side environment, based on request side information such as spectacle lens information, frame information, prescription value information, and ordering side area information for requesting to manufacture the spectacle lens, and manufacturing side information of a spectacle lens including edger information, environment information such as environment information at an ordering side of the spectacle lens and such as environment information at a manufacturing side of the spectacle lens, and lens deformation information regarding a deformation of a lens according to an environment; and
an intermediary side transmission part configured to transmit to outside edging information acquired by the edging information acquisition part.

An eighth aspect is a manufacturing information management device of a spectacle lens, including:
an edging information acquisition part configured to acquire edging information calculated in consideration of a lens deformation amount between a case when a spectacle lens is present in an ordering side environment and a case when a spectacle lens is present in a manufacturing side environment, based on request side information such as spectacle lens information, frame information, prescription value information, and ordering side area information for requesting to manufacture the spectacle lens, and manufacturing side information of a spectacle lens including edger information, environment information such as environment information at an ordering side of the spectacle lens and such as environment information at a manufacturing side of the spectacle lens, and lens deformation information regarding a deformation of a lens according to an environment; and
an intermediary side transmission part configured to transmit to outside edging information acquired by the edging information acquisition part.

A ninth aspect is a manufacturing information management method of a spectacle lens, for transmitting to outside edging information calculated in consideration of a lens deformation amount between a case when a spectacle lens is present in an ordering side environment and a case when a spectacle lens is present in a manufacturing side environment, based on request side information such as spectacle lens information, frame information, prescription value information, and ordering side area information for requesting to manufacture the spectacle lens, and manufacturing side information of a spectacle lens including edger information, environment information such as environment information at an ordering side of the spectacle lens and such as environment information at a manufacturing side of the spectacle lens, and lens deformation information regarding a deformation of a lens according to an environment.

### Advantage of the Invention

According to the present invention, a spectacle lens can be provided globally and speedily, which can be framed into a spectacle frame satisfactorily, regardless of the locations of the ordering side and the manufacturing side of the spectacle lens.

### Brief description of the drawings

FIG. 1 is a schematic block diagram of a spectacle lens manufacturing system according to this embodiment.
FIG. 2 is a flowchart showing a procedure of manufacturing a spectacle lens according to this embodiment.
FIG. 3 is a schematic explanatory view regarding a spectacle lens manufacturing system according to embodiment 2.
FIG. 4 is a schematic explanatory view regarding a spectacle lens manufacturing system according to embodiment 3.
FIG. 5 is a schematic explanatory vies regarding a manufacturing information management system of a spectacle lens according to embodiment 4.

### Detailed description of the Invention

[Embodiment 1]

An embodiment of the present invention will be described hereafter. This embodiment will be described in the following order.
1. A spectacle lens manufacturing system
   1-A) Request side computer
      1-A-a) Request side transmission part
         (1) Request side information
            (1a) Spectacle lens information
            (1b) Frame information
            (1c) Prescription value information
            (1d) Ordering side area information
   1-B) Manufacturing side computer
      1-B-a) Edger
         (2) Manufacturing side information
            (2a) Edger information
      1-B-b) Environment information acquisition part
         (3) Environment information
            (3a) Ordering side environment information
            (3b) Manufacturing side environment information
      1-B-c) Lens deformation information acquisition part
         (4) Lens deformation information
      1-B-d) Calculation part
      1-B-e) Edging information acquisition part
         (5) Edging information
   1-C) Others
2. A spectacle lens manufacturing device
3. Program for spectacle lens manufacturing system
4. Manufacturing method of a spectacle lens
5. Effect of an embodiment
6. Modified example

This embodiment is set as [Embodiment 1], and shows a simple case that a manufacturing side computer receives a request from a request side computer, and a spectacle lens is manufactured by an edger connected to the manufacturing side computer.

[Embodiment 2] shows a case that there are a plurality of manufacturing sides (at least manufacturing party A and manufacturing party B), which is the case as follows.

That is, edging information is calculated in consideration of a lens deformation amount at a manufacturing party A, to thereby perform edging of the spectacle lens in accordance with the edging information. On the other hand, regarding the spectacle lens not manufactured by the manufacturing party A, the manufacturing party A requests a manufacturing party B to manufacture the spectacle lens. Then, the manufacturing party B who receives the request, also calculates the edging information in consideration of the lens deformation amount.

[Embodiment 3] shows the following case, which is the case that there are a plurality of manufactures (manufacturing party A and manufacturing party B). Namely, the manufacturing party A calculates the edging information in consideration of the lens deformation amount, and edges the spectacle lens in accordance with the edging information. On the other hand, regarding the spectacle lens not manufactured by the manufacturing party A, the manufacturing party A requests the manufacturing party B to manufacture the spectacle lens. However, the manufacturing party A calculates the lens deformation amount and the edging information in consideration of the environment information of an area of the manufacturing party B. Then, the manufacturing party B manufactures the spectacle lens in accordance with the lens deformation amount (edging information itself depending on a case) transmitted from the manufacturing party A.

[Embodiment 4] shows not a case of a self-manufacturing of the spectacle lens, but a case of subcontracting the manufacturing party of the spectacle lens to others, which is the case of focusing on the management of the manufacturing information of the spectacle lens.

This embodiment shows a case of an improved supply system of a spectacle lens provided by the inventor of the present invention, and disclosed by the present applicant in WO2007/077848 Publication, as a manufacturing system of the spectacle lens (for example, specifically at least one of a request side computer and a manufacturing side computer). This specification describes all contents of WO2007/077848. Then, in this specification, the content of the WO2007/077848 Publication may be suitably applied to a portion not specified otherwise, while focusing on the description of the present invention.

### <1. Spectacle lens manufacturing system>

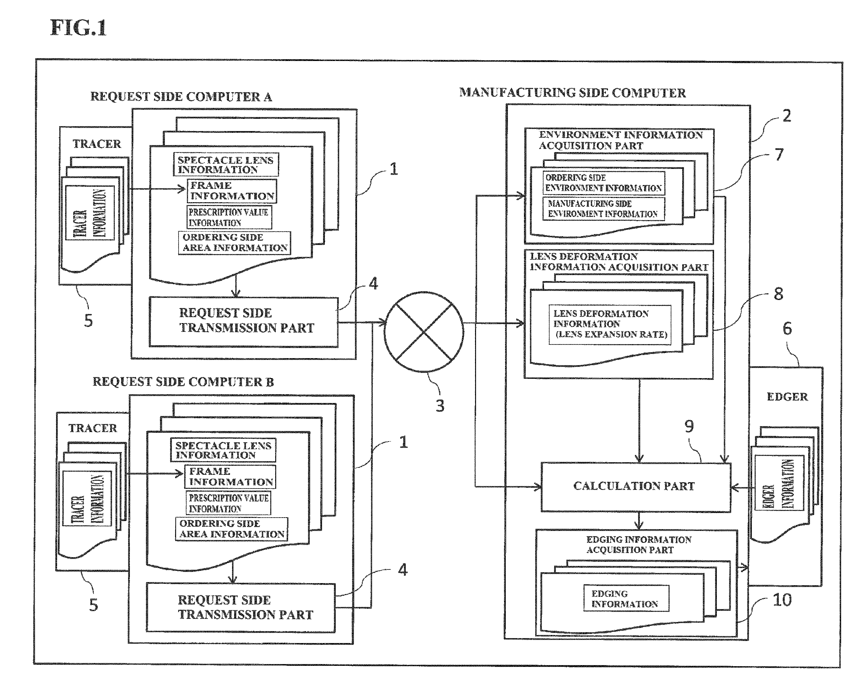

A functional structure of the spectacle lens manufacturing system according to this embodiment will be described first. FIG. 1 is a schematic block diagram of the spectacle lens manufacturing system according to this embodiment. The spectacle lens manufacturing system according to this embodiment is roughly divided into a request side computer 1 installed at a request side of a spectacle lens, and a manufacturing side computer 2 installed at a manufacturing side of a spectacle lens. Then, the request side computer 1 and the manufacturing side computer 2 are connected with each other via a communication line 3.

### 1-A) Request side computer 1

The request side computer 1 refers to a computer installed at a side for requesting an acquisition of the edging information required for manufacturing a spectacle lens. The "request side of manufacturing a spectacle lens" refers to the ordering side of a spectacle lens, which is a prime contractor when manufacture of the spectacle lens is requested to a subcontractor by the prime contractor who receives an order of the spectacle lens, or refers to the subcontractor when manufacture of the spectacle lens is requested to further another subcontractor by the subcontractor. This embodiment shows a case that "the request side of manufacturing a spectacle lens" is "the ordering side of a spectacle lens" so as to be easy to be understood. "The ordering side of a spectacle lens" also refers to a "spectacle shop" in this embodiment.

In the case of this embodiment, the request side computer 1 is a computer installed at a spectacle shop. A person who is considering a purchase of a spectacle lens (a spectacle wearer and a client) comes to the spectacle shop. Then, information for ordering a spectacle lens is acquired from the client. The information includes spectacle lens information, frame information, prescription value information, and ordering side area information, etc., and any one of these information will be described later.

The request side computer 1 has a function as a computer. A plurality of request side computers 1 may exist in a system.

Further, a controller is present in the request side computer 1, for managing and controlling various information required for manufacturing a spectacle lens, and for managing and controlling each part provided in the request side computer 1. However, a specific structure of the controller may be realized utilizing a publicly-known technique, and detailed explanation therefore is omitted here.

### 1-A-a) Request side transmission part 4

A request side transmission part 4 is given as a structure provided in the request side computer 1. Information treated by this structure will be descried hereafter, together with the structure.

The request side transmission part 4 of this embodiment has a function of transmitting order side area information (1d) to an environment information acquisition part 7 for specifying order side environment information (3a), and transmitting spectacle lens information (1a) to a lens deformation information acquisition part 8, and transmitting request side information (1) to a calculation part 9.

Each information will be described hereafter.

Since there are much kinds of information described in this embodiment, each information is indicated by numbers and lower-case alphabetic characters in parentheses. In the case of the same number, each information has a relationship such that "spectacle lens information (1a) and frame information (1b) belong to the request side information (1)" for example.

Description of (1), (2), ... is omitted, for the convenience of explanation.

### (1) Request side information

Spectacle lens information, frame information, prescription value information, and ordering side area information, etc., are given as the request side information. The abovementioned each information will be described hereafter.

### (1a) Spectacle lens information

The spectacle lens information is the information which makes a pair with the frame information, and which is the information regarding a spectacle lens. Information belonging to the spectacle lens information, includes the type of the spectacle lens (such as monofocal lens, bifocal lens, and progressive power lens, etc.), materials, lens curve, lens color, and presence/absence of a functional film (such as a light control film, a polarizing film, and a hard coat film, etc.), for example.

### (1b) Frame information

The frame information is the information regarding a shape of a portion fitted into an outer edge of the spectacle lens. For example, frame material, frame shape data, frame size, tilt angle, frame color, frame maker, and model name, etc., can be given as the information belonging to the frame information. The frame information can be acquired by using a tracer 5 installed in the spectacle shop. The tracer 5 three-dimensionally measures the frame shape. A measurement result obtained by the tracer 5, is inputted in the request side computer 1 as frame shape data. A publicly-known tracer can be used as the tracer 5.

The information regarding the tracer 5 (such as a maker of the tracer 5 and a model, etc.) is also included in the frame information.

Incidentally, although it is conceivable that the manufacture side has the tracer 5, the frame information regarding a frame selected by the request side is classified as the request side information similarly to the frame information for the convenience of explanation, because it is the request side that selects the frame. The "request side information" called here, means the information resulting from the content of the request.

### (1c) Prescription value information

The prescription value information is the information regarding a prescription value required for the spectacle lens worn by a client. The information belonging to the prescription value information includes surface power, astigmatic power, astigmatic axis, addition, prism prescription, etc.

### (1d) Ordering side area information

The ordering side area information is the information that triggers acquisition of the environment information at the ordering side described later. The ordering side area information includes a place where the client lives. Although details are described later, when the ordering side area information is transmitted to the environment information acquisition part by the request side transmission part 4, the environment information acquisition part 7 acquires the environment information of the place where the client lives, namely, the order side environment information, from a third party media (for example, weather information on the Internet), based on the ordering side area information.

In addition, the information required for manufacturing a spectacle lens may also be prepared as the request side information. For example, "layout information" can be given. The information belonging to the layout information includes a pupil distance (pupil distance for distance vision and pupil distance for near vision), pupil height, and fitting point (eye point), etc.

### 1-B) Manufacturing side computer 2

The manufacturing side computer 2 refers to a computer installed at a side of manufacturing a spectacle lens. Edging information required for manufacturing a spectacle lens by the edger 6, is acquired under the manufacturing side environment, so that the spectacle frame is fitted into the frame even under the ordering side environment. The edging information will be described later.

The manufacturing side computer 2 has a function as a computer. A plurality of manufacturing side computers 2 may exist in the system.

Further, a controller is present in the manufacturing side computer 2, for managing and controlling various information required for manufacturing a spectacle lens, and managing and controlling each part provided in the manufacturing side computer. However, a specific structure of the controller may be realized using a publicly-known technique, and detailed explanation therefore is omitted here.

The structure provided in the manufacturing side computer 2 is as follows:
- the environment information acquisition part 7 for acquiring environment information,
- the lens deformation information acquisition part 8 for acquiring lens deformation information,
- the calculation part 9 for calculating edging information, and
- the edging information acquisition part 10 for acquiring edging information calculated in consideration of the lens deformation amount between the case when the spectacle lens is present in the ordering side environment, and the case when the spectacle lens is present in the manufacturing side environment.

### 1-B-a) Edger 6

The edger 6 is configured to edge the spectacle lens for framing it into the frame. The spectacle lens to be edged (called an "unedged lens") is provided by being designed and manufactured by a lens maker, and refers to a lens in a state that it is not edged so as to suit to the frame shape. Generally, the uncut lens having a round outer shape is treated as the unedged lens. In the edging by the edger 6, rough edging and finish edging are performed. The rough edging is an edging step of edging the spectacle lens into a shape one size larger than a finish shape of a final lens.

The finish edging is the edging performed to the spectacle lens in accordance with the finish shape of the final lens, and which is the edging step including bevel edging. The bevel edging refers to the edging of forming a bevel (for example, mountain-shaped bevel V-groove shaped bevel (goorving), and plano-bevel, etc.) on an outer circumferential surface of the spectacle lens.

The rough edging and the finish edging may be performed by changing the edging tool in each step, or may be performed by using the same edging tool. Further, an edging system of the rough edging and the finish edging may be changed in each step, like cutting for the rough edging, and grinding for the finish edging, or the same edging system may be used. Further, mirror-finish may also be included in the finish edging as needed. The mirror finish is the processing of giving a polish to an edging surface of a lens by a tool with a fine texture.

### (2) Manufacturing side information

### (2a) Edger information

Edger information can be mainly given as the manufacturing side information. The edger information is the information regarding the edger 6 itself, and for example corresponds to information regarding edging propriety, or information regarding edging parameters, etc. The information regarding the edging propriety includes maximum/minimum edging diameters that can be edged, maximum/minimum edge thickness that can be edged, and a lens material that can be edged, etc., for example. The edging parameters include a tool shape of the edging tool, a tool diameter, and a bevel shape to be edged, etc., for example.

The "manufacturing side area information" can be given as the other manufacturing side information. The manufacturing side area information is the information to trigger the acquisition of the environment information of the manufacturing side described later. A place where a manufacturing side plant is present, can be given as the manufacturing side area information. However, as described later, when the manufacturing side environment information cannot be acquired from a thermometer provided in the edger 6 and the manufacturing side computer 2, the manufacturing side area information is not required.

### 1-B-b) Environment information acquisition part 7

### (3) Environment information

The environment information acquisition part 7 of this embodiment has a function of acquiring the spectacle lens ordering side environment information (3a) and the spectacle lens manufacturing side environment information (3b), and has a function of receiving the ordering side area information (1d) transmitted from the request side transmission part 4. The ordering side area information (1d) is the information for specifying the ordering side environment information (3a).

### (3a) Ordering side environment information

The ordering side environment information is the information regarding an environment of an area where an orderer lives, and the information regarding the weather as a factor of giving a variation in a size of the spectacle lens. For example, a temperature at the time of an order or an average temperature at a scheduled delivery time, can be given as the environment information. Further, use of an average room temperature or an average water temperature can be given as the environment information. Also, humidity can also be used as the environment information. These information may be acquired from the third party media based on the ordering side area information.

### (3b) Manufacturing side environment information

The manufacturing side environment information is the information regarding an environment of an area where there is a plant for manufacturing the spectacle lens by the manufacturing party, which is the information regarding the weather as a factor of giving a variation in the size of the spectacle lens. For example, a temperature or an average temperature at the time of manufacture, can be given. Also, an average room temperature or an average water temperature in the plant, can be given. Also, humidity may be used as the environment information. These information may be acquired from the third party media (for example, weather information on the Internet), or may be acquired from the thermometer provided in the edger 6 and the manufacturing side computer 2.

This embodiment shows a case that the ordering side environment and the manufacturing side environment are different from each other. However, when the ordering side environment and the manufacturing side environment are not different from each other, or when there is only a difference between them so as not to allow a trouble to occur in framing the spectacle lens into the spectacle frame, the edging information may be calculated without considering the lens deformation amount. Namely, a method of calculating the edging information is varied, depending on a degree of the difference between the ordering side environment and the manufacturing side environment. In order to determine whether to use any one of the methods, "a correction necessity/non-necessity judgment part based on the environment information (simply called a necessity/non-necessity judgment part hereafter)" may be separately provided in an appearance of connecting to the environment information acquisition part 7 and the lens deformation information acquisition part 8. A reference of judgment may be suitably determined according to a precision requested when framing the spectacle lens into the spectacle frame.

### 1-B-b) Lens deformation information acquisition part 8

### (4) Lens deformation information

The lens deformation information acquisition part 8 of this embodiment has a function of acquiring the lens deformation information, and also has a function of receiving the spectacle lens information (1a) transmitted from the request side transmission part 4. The spectacle lens information (1a) is the information for specifying the lens deformation information (4). When the necessity/non-necessity judgment part judges that correction is required, the necessity/non-necessity judgment part transmits to the lens deformation information acquisition part 8 a command of "transmit the lens deformation information to the calculation part 9".

Then, the lens deformation information is the information regarding a relation between the environment information and the lens deformation amount, which is the information as a base of calculating the lens deformation amount between the case when the spectacle lens is present in the ordering side environment, and the case when the spectacle lens is present in the manufacturing side. As an example, a lens expansion rate can be given, which is set in a matrix constituted by the temperature difference and the spectacle lens material. Namely, the lens deformation amount can be calculated by the calculation part 9 described later, based on the environment information (temperature difference) and the lens deformation information (deformation amount in a radius value caused by the temperature difference). Then, finally, in accordance with the edging information (5) in consideration of the lens deformation amount, the spectacle lens is manufactured by the edger 6 under the manufacturing side environment, so that the spectacle lens is fitted into the frame.

### 1-B-d) Calculation part 9

The calculation part 9 of this embodiment has a function of calculating the edging information (5). The edging information is calculated based on the request side information (1), the manufacturing side information (2), the environment information (3) transmitted from the environment information acquisition part 7, and the lens deformation information (4) transmitted from the lens deformation information acquisition part 8.

The edging information calculated here is calculated, first, by performing a "first calculation" for calculating a scheduled edging shape of the spectacle lens in consideration of the factor other than the environment, and a "second calculation" in consideration of the lens deformation amount caused by the difference between the ordering side environment and the manufacturing side environment. The first calculation and the second calculation will be described hereafter.

### (First calculation)

First, in consideration of the factor other than the environment, basic edging information is calculated, for edging the spectacle lens into a scheduled edging shape, in consideration of the factor other than the environment. A publicly-known method may be used for calculating the basic edging information. Also, the publicly-known parameter may be used. As an example of the basic edging information, the request side information of the spectacle lens including the spectacle lens information, the frame information, the prescription value information, and the ordering side area information, and the spectacle lens manufacturing side information including the edger information, can be given.

When the basic edging information is transmitted to the manufacturing side by the ordering side, usually, the basic edging information that can be acquired by the ordering side, is transmitted. Then, at the manufacturing side, the transmitted basic edging information and the basic edging information possessed by the manufacturing side, are combined, to thereby arrange all basic edging information. Thereafter, even if there is a case of using the expression of "the basic edging information is transmitted", this expression does not necessarily mean that all basic edging information is transmitted, but means that the basic edging information in a range of the transmitting side is suitably transmitted.

### (Second calculation)

In the second calculation, as described above, the lens deformation amount is calculated by the calculation part 9, based on the environment information (temperature difference) and the lens deformation information (deformation amount caused by the temperature difference). Then, the lens deformation amount is taken into consideration for the basic edging information.

At this time, at least frame information and prescription value information are received by the calculation part 9 from the request side transmission part 4. The prescription value information has been described above, wherein the "frame information" called here, includes the maker of the tracer 5 and the type of the tracer 5 specifically. Rim shape data of the frame may be added in the frame information. The rim shape data of the frame includes a bevel position and a groove depth when grooving is performed, in addition to the rim shape.

Owing to the frame information, data regarding a partial shape into which the spectacle lens is fitted, can be obtained. In other words, this shape is an outer shape possessed by the spectacle lens. Then, the variation is provided to a target outer shape in consideration of the lens deformation amount. For example, when the manufacturing side is present in the tropics, and the ordering side is present in a cold region, shrinkage of the spectacle lens occurs. Therefore, the manufacturing side manufactures the spectacle lens in accordance with the "edging information" calculated after largely setting the outer shape of the spectacle lens than expected.

Thus, the edging information in consideration of the lens deformation information is calculated by the calculation part 9, based on the request side information, the manufacturing side information, the environment information transmitted from the environment information acquisition part 7, and the lens deformation information transmitted from the lens deformation information acquisition part 8. Thereafter, the edging information is transmitted to the edging information acquisition part 10.

In conclusion, a stable sized spectacle lens can be supplied, which is not influenced by the difference between the ordering side weather and the manufacturing side weather, by using the environment information and the lens deformation information. Further, when the necessity/non-necessity judgment part is provided, whether or not additional size correction is required, is judged based on a weather (temperature) difference between the ordering side and the manufacturing side. Only when it is judged that the additional size correction is required, a lens expansion value (namely, the lens deformation amount) is referenced, which is set in a matrix composed of in-house accumulated temperature difference and lens materials, and the value thus referenced is transmitted to the manufacturing side. Thus, the stable sized spectacle lens can be supplied, and in addition, an extra calculation is not required in some cases, and further the spectacle lens can be speedily manufactured and provided. However, of course, the effect of the present invention can also be exhibited, even by calculating the edging information based on the environment information, without providing the necessity/non-necessity judgment part.

### 1-B-e) Edging information acquisition part 10

### (5) Edging information

The edging information acquisition part 10 of this embodiment has a function of acquiring the edging information calculated in consideration of the lens deformation amount between the case when the spectacle lens is present in the ordering side environment and the case when the spectacle lens is present in the manufacturing side environment.

As the edging information acquisition part 10, an arbitrary one may be used if it has a structure capable of acquiring the edging information calculated by the abovementioned method. For example, this part may be a recording part for recording the edging information, or may have a structure of transmitting the edging information to the edger 6 of the spectacle lens.

### 1-C) Others

Of course, a structure other than the abovementioned each part may be provided in the edging information acquisition system of this embodiment. For example, the recording part for recording each kind of information as described above, a server, and the communication line 3, etc., may be separately provided. Further, a portion named as "... acquisition part" in the abovementioned each part, may have the recording part. Further, the recording part for recording the information regarding a relation between the environment information and the lens deformation amount, may be provided.

Each kind of the information listed above, may be the information recorded in the recording part provided in the request side computer 1. When the same kind of the spectacle lens is manufactured before based on the client's request, the information recorded in the recording part may be transmitted to the calculation part 9.

### <2. Spectacle lens manufacturing device>

The above-described embodiment shows a case that a role sharing is performed between the request side computer 1 and the manufacturing side computer 2, to acquire the edging information. On the other hand, one of the characteristics of the present invention is to acquire the edging information based on the environment information and the spectacle lens information which are the base of calculating the edging information. Therefore, the present invention is reflected on the device for manufacturing the spectacle lens based on the edging information which is calculated based on the environment information and the spectacle lens deformation information, thus having a great technical characteristic.

The spectacle lens manufacturing device called here may have at least the edging information acquisition part 10. Of course, each part excluding the edging information acquisition part 10 may be suitably provided. Further, it is preferable that the spectacle lens manufacturing device includes all parts excluding the request side transmission part 4, out of the abovementioned each part. Thus, the manufacturing side can acquire the edging information, and the manufacturing side can manufacture the spectacle lens in accordance with the edging information.

A preferable embodiment of the spectacle lens manufacturing device has been described in the abovementioned preferable embodiment of each part constituting the spectacle lens manufacturing system. The spectacle lens manufacturing system including preferable each part, is the preferable embodiment of the spectacle lens manufacturing device.

### <3. Program for the spectacle lens manufacturing system>

The present invention is also reflected on the program for the spectacle lens manufacturing system for causing a computer to function as the edging information acquisition part 10 that acquires edging information, after calculating the edging information based on the environment information and the spectacle lens deformation information, thus having a great technical characteristic. Of course, the present invention is also reflected on a recording medium in which the program is stored, thus having a great technical characteristic.

The "program for the spectacle lens manufacturing system" called here is acceptable if it can cause the computer to function as at last the edging information acquisition part 10 installed on each computer and under an instruction from the controller. Of course, the computer may be suitably caused to function as each part excluding the edging information acquisition part 10. Further, it is preferable that the computer is caused to function as the abovementioned each part including the edging information acquisition part 10.

A preferable embodiment of the program for the spectacle lens manufacturing system has been described in the abovementioned preferable embodiment of each part constituting the spectacle lens manufacturing system. The program including each part considered to be preferable in the spectacle lens manufacturing system, is the preferable embodiment of this program.

### <4. Spectacle lens manufacturing method>

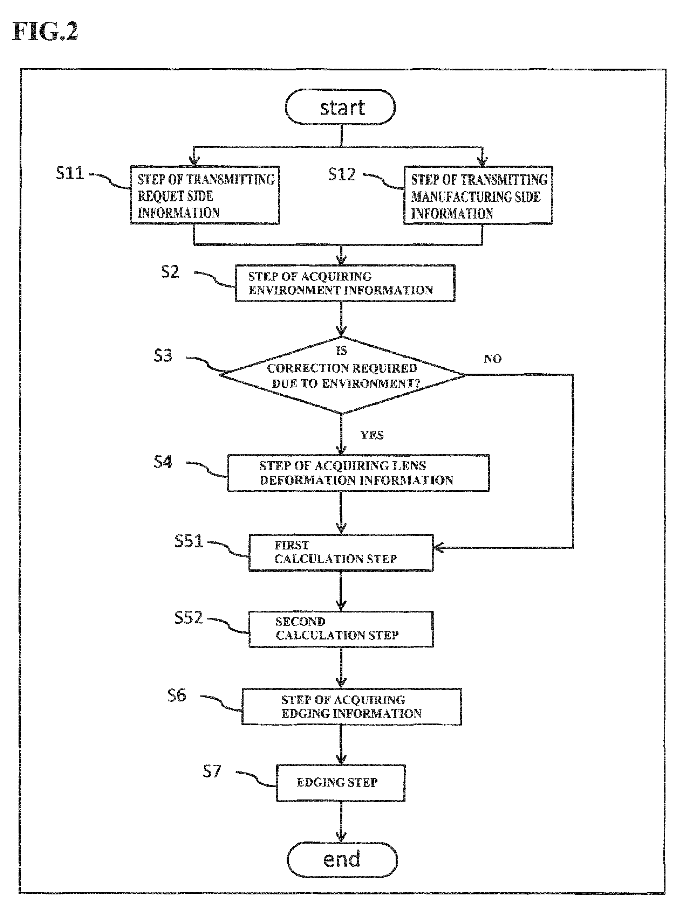

A specific procedure of manufacturing a spectacle lens will be described using FIG. 2. FIG. 2 is a flowchart showing the procedure of manufacturing a spectacle lens according to this embodiment.

### (S11 Transmission step of the request side information)

First, in order to perform a first calculation by the calculation part 9 of the manufacturing side computer 2, various information is collected to the calculation part 9.

The request side information including the spectacle lens information, the frame information, the prescription value information, and the ordering side area information, is transmitted to the calculation part 9 by the request side transmission part 4 from the request side computer 1.

### (S12 Transmission step of the manufacturing side information)

The manufacturing side information including the edger information is transmitted to the calculation part 9 from the edger 6 connected to the manufacturing side computer 2.

### (S2 Environment information acquisition step)

On the other hand, in order to acquire the environment information including the environment information at the ordering side of the spectacle lens, and the environment information including the environment information at the manufacturing side of the spectacle lens, the ordering side area information is transmitted to the environment information acquisition part 7 from the request side transmission part 4 of the request side computer 1. Based on the ordering side area information, the environment information acquisition part 7 acquires the information regarding a temperature of the area where an ordering party lives, via a public line. Simultaneously, the environment information acquisition part 7 acquires the information regarding a temperature in a manufacturing plant.

### (S3 Correction necessity/non-necessity judgment step based on the environment information)

In the necessity/non-necessity judgment part for performing correction based on the environment information, necessity/non-necessity for correction is judged based on the environment information.

If there is a difference between the ordering side temperature and the manufacturing side temperature, thereby damaging the previously set precision of framing the spectacle lens, it is judged that correction is required, and the processing is advanced to the following (S4 Lens deformation information acquisition step).

On the other hand, in the other case, it is judged that the correction is not required, and the (S4 Lens deformation information acquisition step) is skipped without acquiring the lens deformation information (S51), and the processing is advanced to (S51 First calculation step) and (S52 Second calculation step). In this case, in the (S52 Second calculation step), the lens deformation amount is not treated as a correction element. In this case, the (S52 Second calculation step) may be omitted.

### (S4 Lens deformation information acquisition step)

Also, in order to acquire the lens deformation information regarding the spectacle lens to be manufactured, the spectacle lens information is transmitted to the lens deformation acquisition part 8 from the request side transmission part 4 of the request side computer 1. Based on the transmitted spectacle lens information, the lens deformation information acquisition part 8 acquires the lens deformation information using a lens expansion rate mainly in accordance with the material of the spectacle lens.

### (S51 First calculation step)

Thereafter, a first calculation is carried out by the calculation part 9. Namely, the basic edging information is calculated.

### (S52 Second calculation step)

Then, a second calculation is carried out by the calculation part 9. Namely, the basic edging information is corrected by the lens deformation amount obtained by the difference between the ordering side temperature and the manufacturing side temperature (environment information).

### (S6 Edging information acquisition step)

The edging information is calculated by the abovementioned first calculation and second calculation. Then, the edging information is recorded in the edging information acquisition part 10.

### (S7 Edging step)

Thereafter, the edging information is transmitted to the edger 6 by the edging information acquisition part 10. Then, the spectacle lens is manufactured by the edger 6 under the manufacturing side environment in accordance with the edging information, so that the spectacle lens is fitted into the frame even under the ordering side environment.

### <5. Effect of this embodiment>

In this embodiment, the following effect is exhibited by the edging information which is the base of manufacturing the spectacle lens at the manufacturing side, in consideration of the difference between the ordering side environment and the manufacturing side environment.

First, the spectacle lens that can be subjected to edging for framing to be framed into the frame with high precision, can be provided wherever the manufacturing side plant is present, and further wherever the ordering party lives. Further such a spectacle lens can be provided, according to a request of an individual client, or according to an individual tracer 5. In other words, this means that a system capable of supplying the spectacle lens of the same quality (size) can be constructed, wherever the manufacturing plant is present. Further, in the area where the ordering party lives, a fitted state of the spectacle lens into the frame with high precision, can be maintained wherever the manufacturing plant is present to manufacture the spectacle lens.

By the system of this embodiment, it becomes possible to sufficiently prepare for the risk of natural disasters in each country, which is increased with a globalization. Then, diversification of the request of the individual client can be responded, and in addition, such a diversified request can be speedily responded by a relatively simple structure that the environment information is employed, thus making it possible to improve a situation that the framing processing can be performed with high precision only by a determined ordering side and a determined manufacturing side. As a result, the diversified client's needs can be speedily responded, and international competitiveness of the manufacturing side can be improved.

Further, according to the system of this embodiment, even if there are a plurality of request side computers 1 and manufacturing side computers 2, unlike the conventional case, the spectacle lens can be manufactured so as to be framed into the frame satisfactorily in accordance with each computer. Such a merit is extremely great in the present situation in which globalization is progressed.

As described above, according to this embodiment, the system, etc., can be provided for globally and speedily manufacturing the spectacle lens that can be framed into the frame satisfactorily, regardless of the place of the request side or the manufacturing side of the spectacle lens.

### <6. Modified example>

A technical range of the present invention is not limited to the above-described embodiment, and includes an embodiment variously modified or improved, in a range capable of deriving a unique effect obtained by the features of the invention or a combination of them.

### (Instalment place of each part structure)

The above-described embodiment shows a case that the abovementioned each part structure is installed in either the request side computer 1 or the manufacturing side computer 2. Meanwhile, the abovementioned each part structure is not necessarily required to be present in either the request side computer 1 or the manufacturing side computer 2. For example, it is also acceptable that the calculation part 9 is installed in another computer or server, and the request side information, the manufacturing side information, the environment information, and the lens deformation information are transmitted to the calculation part 9, and the edging information is calculated by the computer or the server. Then, the following structure may be acceptable: namely, the edging information is transmitted to the edging information acquisition part 10 installed in the manufacturing side computer 2.

However, the edging information is the information to be acquired finally in the actual edging, and therefore the edging information acquisition part 10 is preferably present in the manufacturing side computer 2. The request side transmission part 4 is also preferably present in the request side computer 1 as its name suggests, because the request side information is transmitted to the calculation part 9.

### (Calculation part 9)

In the above-described embodiment, the first calculation and the second calculation are carried out by the calculation part 9 in the manufacturing side computer 2. Meanwhile, it is also acceptable that the calculation part 9 is provided in the request side computer 1, and a structure capable of freely acquiring the manufacturing side information (for example, a manufacturing side information reception part, although not shown) is provided, and the first calculation and the second calculation are carried out by the calculation part 9 of the request side computer 1. Also, role sharing may be performed in such a manner that the first calculation is carried out by the calculation part 9 of the request side computer 1, and the second calculation is carried out by the calculation part 9 of the manufacturing side computer 2. It is also acceptable that other portion of the first calculation is carried out by other place (the manufacturing side computer 2 or the calculation part 9 installed in another computer or server), while carrying out a part of the first calculation by the request side computer 1. Further, it is also acceptable that the outer shape of the spectacle lens which is the base of the size correction of the spectacle lens, is calculated by the first calculation based on the frame information, and the lens deformation amount is taken into consideration for the outer shape of the spectacle lens by the second calculation.

Further, in the above-described embodiment, the environment information and the lens deformation information are collected to the calculation part 9 installed in the manufacturing side computer 2, and the lens deformation amount is calculated by the calculation part 9. On the other hand, it is acceptable that the environment information acquisition part 7 transmits the environment information to the lens deformation information acquisition part 8. Then, it is also acceptable that the lens deformation amount is calculated by the lens deformation acquisition part 8. In this case, the lens deformation acquisition part 8 functions as a part of the calculation part 9.

Reversely, it is also acceptable that the lens deformation information acquisition part 8 transmits the lens deformation information to the environment information acquisition part 7. Then, the lens deformation amount may be calculated by the lens deformation information acquisition part 8. In this case, the environment information acquisition part 7 functions as a part of the calculation part 9.

### (Ordering side of the spectacle lens)

The above-described embodiment shows a case that the "ordering side of the spectacle lens" indicates the "spectacle shop". Usually, since the client lives in the neighborhood of the spectacle shop, the spectacle lens which is precisely framed into the spectacle frame at the spectacle shop, can be maintained in this state even at the client's residence. Meanwhile, if the client lives at a place different from an area environment of the spectacle shop, an excellent framing state cannot be finally maintained, if the area information of the spectacle shop is used as the "ordering side area information". In this case, information regarding the client's residence may be set as the "ordering side area information". Namely, in this case, the "ordering side of the spectacle lens" means the "client". By such a setting, even in a case that the client does not live in the neighborhood of the spectacle shop, the effect of the present invention can be exhibited.

### [Embodiment 2]

As described in the abovementioned embodiment, in this embodiment, even in a case that there a plurality of manufacturing side parties (manufacturing party A and manufacturing party B), first, the spectacle lens is manufactured in consideration of the lens deformation amount at the manufacturing part A, and regarding the spectacle lens not manufactured by the manufacturing party A, the manufacturing party B manufactures this spectacle lens. At the time of this manufacture, the manufacturing party B calculates the edging information in consideration of the environment information of the manufacturing party B.

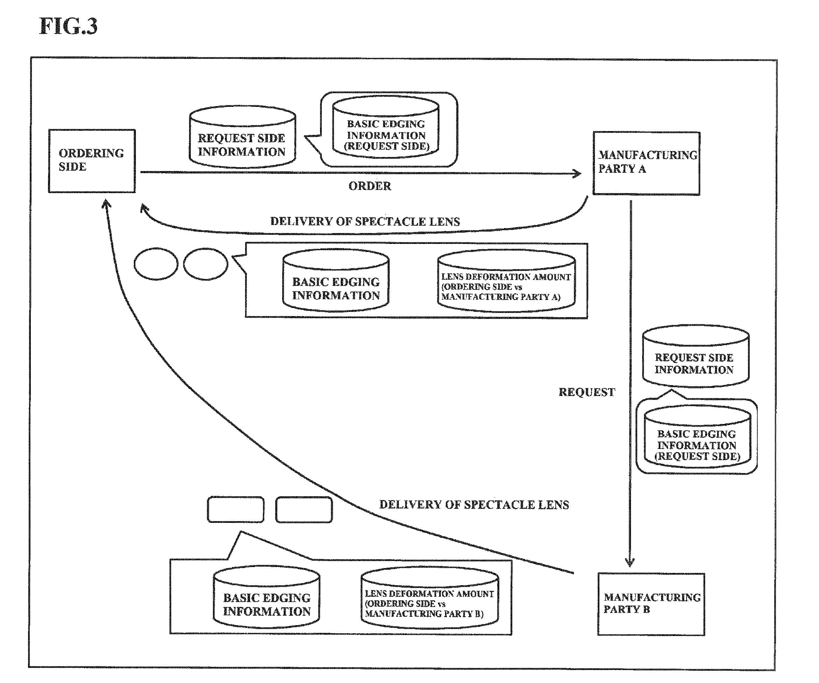

This embodiment will be described hereafter using FIG. 3. FIG. 3 is a schematic explanatory view regarding the spectacle lens manufacturing system according to another embodiment. Similarly to the above-described embodiment, the request side computer 1 and the tracer 5 are provided at the ordering side (spectacle shop) in FIG. 3. Also, the manufacturing side computer 2 and the edger 6 are provided at the manufacturing side. The same thing can be said for [Embodiment 3] described later.

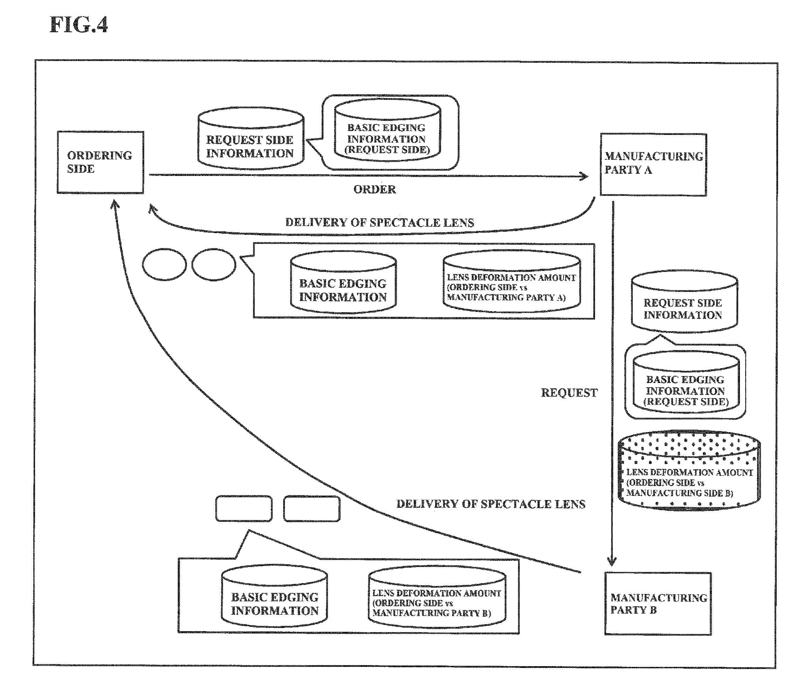

Further, this embodiment shows a case that a part of the calculation (first calculation) of the basic edging information is carried out at the ordering side. Specifically, the ordering side calculates the information that can be calculated at the ordering side, out of the basic edging information. In FIG. 3 (and FIG. 4 described later), this information is descried as the basic edging information (request side). Namely, in this embodiment, a part of the calculation part 9 of the [Embodiment 1] is also provided in the request side computer 1. The same thing can be said for the [Embodiment 3] described later.

First, the spectacle shop which is the ordering side, calculates the basic edging information (request side). Then, the basic edging information is transmitted to the manufacturing side computer 2 of the manufacturing party A. Then, the lens deformation amount is calculated from the transmitted basic edging information (request side), the basic edging information that can be calculated by the manufacturing party A like the edger information (manufacturing side), the difference of the environment between the manufacturing side A and the ordering side, and the lens deformation information, and finally the edging information is calculated, to thereby manufacture the spectacle lens by the edger 6 of the manufacturing party A.

Meanwhile, when manufacture of the spectacle lens not manufactured by the manufacturing party A, is requested for the reason of the shape of the spectacle lens, the manufacturing party A request the manufacturing party B to manufacture the spectacle lens. At the time of the request, the basic edging information is transmitted to the manufacturing side computer 2 of the manufacturing party B from the manufacturing side computer 2 of the manufacturing party A. Then, the manufacturing party B calculates the lens deformation amount from the difference of the environment between the manufacturing side B and the ordering side, and the lens deformation information so that the edging information is finally calculated, to thereby manufacture the spectacle lens.

Briefly, in other words, the manufacturing party A manufactures the spectacle lens in consideration of the difference between its own environment and the ordering side environment, and another manufacturing party B also manufactures the spectacle lens in consideration of the difference between its own environment and the ordering side environment.

By employing the above-described technique, the manufacturing party A is not required to manufacture all spectacle lenses, thus making it possible to manufacture the spectacle lens that can be framed into the spectacle frame satisfactorily according to the type of the spectacle lens. In addition, even if the manufacturing party is preset in any one of the areas, the spectacle lens that can be framed into the spectacle frame satisfactorily, can be speedily provided. This merit is extremely great for the manufacturing party in the situation of the globalization.

Also, in this embodiment, when the "request side" is the ordering side (spectacle shop), the "manufacturing side" indicates the manufacturing party A. Of course, there is no difference in the point that the request of the spectacle shop is received by the manufacturing party B, although it is received via the manufacturing party A. On the other hand, the manufacture of the spectacle lens not manufactured by the manufacturing party A is requested by the manufacturing party A, and therefore the "request side" can be regarded as the manufacturing party A. In this case, the "manufacturing side" indicates the manufacturing party B. In this case, the manufacturing party A is a prime contractor and the manufacturing party B is a subcontractor. Of course, the request similar to the content requested by the manufacturing party A may be performed by the manufacturing party B.

### [Embodiment 3]

As described at the beginning of the above-described embodiment, in this embodiment, when there are a plurality of manufacturing side parties (manufacturing party A and manufacturing party B), first, the spectacle lens is manufactured in consideration of the lens deformation amount at the manufacturing side A, and regarding the spectacle lens not manufactured by the manufacturing side A, this spectacle lens is manufactured by the manufacturing party B. At the time of such a manufacture, not the manufacturing party B but the manufacturing party A calculates the edging information in consideration of the environment information of the manufacturing party B, and the manufacturing party B manufactures the spectacle lens in accordance with this edging information.

This embodiment will be described hereafter, using FIG. 4. FIG. 4 is a schematic explanatory view of the spectacle lens manufacturing system according to another embodiment.

First, the spectacle shop which is the ordering side, calculates the basic edging information (request side). Then, the basic edging information (request side) is transmitted to the manufacturing side computer 2 of the manufacturing party A. Then, in the manufacturing side computer 2 of the manufacturing party A, the lens deformation amount is calculated from the transmitted basic edging information (request side), the basic edging information that can be calculated by the manufacturing party A, and the difference of the environment between the manufacturing party A and the ordering side and the lens deformation information, so that the edging information is finally calculated, to thereby manufacture the spectacle lens by the edger 6 of the manufacturing party A, in accordance with the edging information.

Meanwhile, when the spectacle not manufactured by the manufacturing party A, is requested for the reason of the shape of the spectacle lens, the manufacturing party A request the manufacturing party B to manufacture the spectacle lens. In this embodiment, unlike the [Embodiment 2], final edging information is transmitted to the manufacturing side computer 2 of the manufacturing party B from the manufacturing side computer 2 of the manufacturing party A at the time of the request. Namely, in the manufacturing side computer 2 of the manufacturing party A, the difference between the environment of the manufacturing party B and the ordering side environment is taken into consideration for the basic edging information. Then, the manufacturing party A transmits the edging information to the manufacturing party B.

Namely, briefly speaking, the manufacturing party A manufactures the spectacle lens in consideration of the difference between its own environment and the ordering side environment, and meanwhile the manufacturing party A uses another manufacturing party B as a subcontractor. The edging information in consideration of the environment of the manufacturing party B is calculated by the manufacturing party A and transmitted to the manufacturing party B. Then, the manufacturing party B manufactures the spectacle lens as the subcontractor of the manufacturing party A. In addition, the manufacturing party B can manufacture the spectacle lens in consideration of the difference between its own environment and the ordering side environment, although the manufacturing party B is used as the subcontractor for manufacturing the spectacle lens.

It can be considered that the manufacturing party A does not have the basic edging information (manufacturing side) of the manufacturing party B. Therefore, it is also acceptable that the manufacturing party A transmits to the manufacturing party B not the edging information itself but the information excluding the basic edging information (manufacturing side) from the edging information. In this case, the manufacturing party B calculates the edging information by combining the basic edging information (manufacturing side) possessed by the manufacturing party B, with the information excluding the basic edging information (manufacturing side), to thereby manufacture the spectacle lens by the manufacturing party B based on the edging information.

In any case, by employing the above-described technique, the similar effect as the effect of [Embodiment 2] can be obtained. In addition, the technique or each kind of information for calculating the edging information, is not required to be disclosed to the manufacturing party B. When the manufacturing party B is present abroad, this merit is extremely great for the manufacturing party in the situation of globalization.

Also, in this embodiment, regarding whether the "request side" corresponds to the spectacle shop or corresponds to the manufacturing party A, or regarding what is the "manufacturing side", the content described in [Embodiment 2] may be applied.

Further, this embodiment shows the case that the manufacturing party A calculates the edging information in accordance with the environment of the manufacturing party B. However, when the difference of the environment is small between the manufacturing party A and the manufacturing party B, it is acceptable to transmit to the manufacturing party B the edging information in consideration of the difference of the environment not between the ordering party and the manufacturing party B that actually manufactures the spectacle lens, but between the ordering party and the manufacturing party A as the environment information, to manufacture the spectacle lens with the same high quality as the spectacle lens manufactured by the manufacturing party A. In this case, even if the manufacturing party A and the manufacturing party B have addresses far away from each other, the precision of framing the spectacle lens into the spectacle frame, can be the same. This merit is extremely great for the manufacturing party in the situation of globalization.

### [Embodiment 4]

As described in the beginning of the above-described embodiment, this embodiment shows a case that the spectacle lens is manufactured not by its own side but by others, namely, shows a case that the management of the manufacturing information of the spectacle lens is focused.

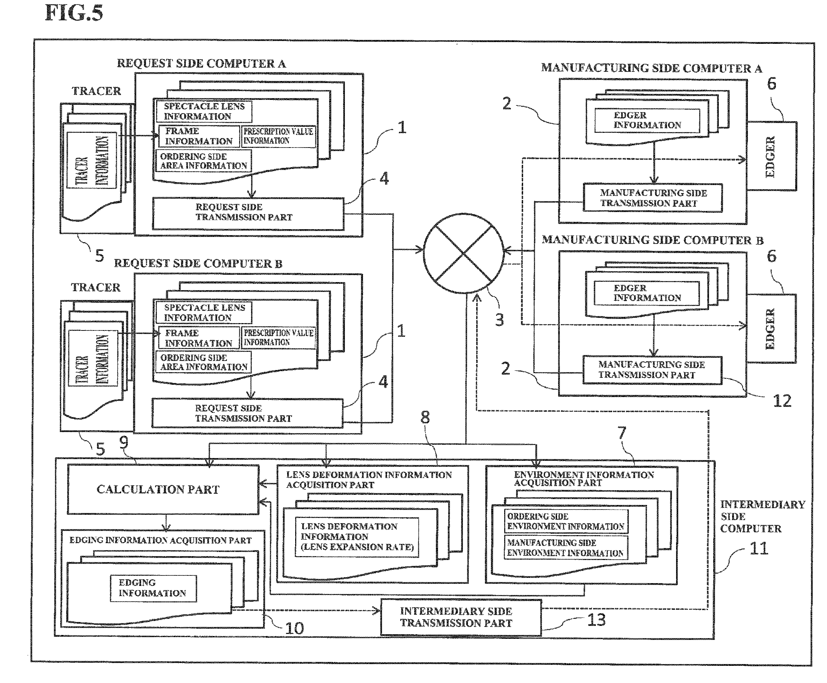

This embodiment will be described hereafter, using FIG. 5. FIG. 5 is a schematic explanatory view of the manufacturing information management system of the spectacle lens.

First, the client (namely, the spectacle shop) which is the ordering side acquires the request side information. Then, the request side information is transmitted to an intermediary side computer 11.

On the other hand, the intermediary side computer is connected to the manufacturing side computer 2 possessed by the manufacturing parties A and B who actually manufacture the spectacle lens. Then, the manufacturing side information is transmitted to the intermediary side computer 11 from the manufacturing side transmission part 12. This embodiment shows not a case that the edger information is transmitted to the calculation part 9 from the edger 6, but a case that the edger information recorded in the manufacturing side computer 2 is transmitted to the manufacturing side transmission part 12. As a transmission technique of transmitting the edger information, the technique of the above-described embodiment may be used, or the technique of this embodiment may be used.

Further, the intermediary side computer 11 also includes the "environment information acquisition part 7", "lens deformation information acquisition part 8", "calculation part 9", and "edging information acquisition part 10" provided in the manufacturing side computer 2 in the above-described embodiment.

Then, in the "environment information acquisition part 7", "lens deformation information acquisition part 8", and "calculation part 9" of the intermediary side computer 11, the lens deformation amount is calculated from the difference of the environment between each manufacturing party and the ordering side, and from the lens deformation information, so that the edging information is finally calculated. Then, the calculated edging information is acquired by the edging information acquisition part 10. The edging information is transmitted to the manufacturing side computer 2 of each manufacturing party as an external party, by an intermediate side transmission part 13 provided in the intermediate side computer 11. Then, the manufacturing parties A and B manufacture the spectacle lens by each edger 6, in accordance with the edging information.

As described in the problem of the present invention, globalization of a manufacturing sector has progressed remarkably. With such a globalization, there is also an increased case of not manufacturing the spectacle lens by its own side who engages in a manufacturing industry. Namely, there is also an increased case of providing the edging information of the spectacle lens, to a manufacturing party who actually manufactures the spectacle lens. In such a situation as well, there is still a request to manufacture products speedily, regardless of a change in any situation. Rather, with a development of an information network, importance of managing the edging information described in the above embodiment, has been increased. Under such a circumstance, if edging for framing and framing can be performed with high precision only by the determined ordering side and the determined manufacturing side, diversified client's needs cannot be responded speedily, resulting in a remarkable reduction of international competitiveness of the manufacturing side.

However, by employing the above-described technique, persons who engage in the manufacturing sector can provide the spectacle lens that can be edged for framing and framed into the spectacle frame with high precision, even if they themselves are engaged in a manufacturing sector, or regardless of the place of the manufacturing plant at the manufacturing side, and further regardless of the residence of the ordering party. In this point, a similar effect as embodiment 1 can be obtained.

Further, according to the system of this embodiment, even when there are a plurality of request side computers 1 and manufacturing side computers 2, the spectacle lens that can be framed into the spectacle frame satisfactorily in accordance with each computer, can be manufactured, unlike a conventional case. This merit is extremely great for the manufacturing party in the situation of globalization.

As described above, according to this embodiment, it is possible to provide the system, etc., of globally and speedily manufacturing a spectacle lens that can be framed into the spectacle frame satisfactorily, regardless of the place of the spectacle lens whether it is present at the request side or at the manufacturing side.

Also, in this embodiment, regarding the matter whether the "request side" corresponds to the spectacle shop or the manufacturing party A, and which side corresponds to the "manufacturing side", the content described in [embodiment 2] may be applied.

Further, a preferable embodiment of the manufacturing information management system of the spectacle lens, is described in the above "description of the preferable embodiment" in each part constituting the manufacturing system of the spectacle lens, excluding a point that the edger is not necessarily required to be provided. The system including each preferable part for manufacturing the spectacle lens, is the preferable embodiment of the information management system for manufacturing the spectacle lens.

Further, similarly to the description in embodiment 1, according to the preferable embodiment of the information management device of the spectacle lens, can follow the preferable embodiment of each part constituting the information management system of spectacle lens. Also, in this embodiment, similarly to the program for the manufacturing system of the spectacle lens and the method of manufacturing the spectacle lens, the above effect can be exhibited as well in the program for the information management system for manufacturing the spectacle lens and the method of providing the information for manufacturing the spectacle lens.

1 Request side computer
2 Manufacturing side computer
3 Communication line
4 Request side transmission part
5 Tracer
6 Edger
7 Environment information input part
8 Lens deformation information acquisition part
9 Calculation part
10 Edging information acquisition part
11 Intermediary side computer
12 Manufacturing side transmission part
13 Intermediary side transmission part

## Claims

1. A spectacle lens manufacturing system, comprising:
an edger installed at a manufacturing side of a spectacle lens;
an edging information acquisition part configured to acquire edging information calculated in consideration of a lens deformation amount between a case when a spectacle lens is present in an ordering side environment and a case when a spectacle lens is present in a manufacturing side environment, based on request side information such as spectacle lens information, frame information, prescription value information, and ordering side area information for requesting to manufacture the spectacle lens, and manufacturing side information of a spectacle lens including edger information, environment information such as environment information at an ordering side of the spectacle lens and such as environment information at a manufacturing side of the spectacle lens, and lens deformation information regarding a deformation of a lens according to an environment,
wherein the spectacle lens is manufactured by the edger under a manufacturing side environment so that the spectacle lens is fitted into a frame even under an ordering side environment, in accordance with edging information transmitted to the edger from the edging information acquisition part,
wherein the request side of manufacturing a spectacle lens, refers to the ordering side of a spectacle lens, which is a prime contractor when manufacture of the spectacle lens is requested to a subcontractor by the prime contractor who receives an order of the spectacle lens, or refers to the subcontractor when manufacture of the spectacle lens is requested to further another subcontractor by the subcontractor.

2. The system of claim 1, wherein the environment information includes information regarding a temperature.

3. The system of claim 2, comprising:
a request side computer installed at the request side of manufacturing the spectacle lens;
a manufacturing side computer installed at the manufacturing side of the spectacle lens;
an environment information acquisition part configured to acquire environment information;
a lens deformation information acquisition part configured to acquire lens deformation information; and
a calculation part configured to calculate edging information,
the request side computer further comprising:
a request side transmission part configured to transit ordering side area information to the environment information acquisition part for specifying ordering side environment information, and transmit spectacle lens information to the lens deformation information acquisition part for specifying lens deformation information, and transmit request side information including at least frame information and prescription value information to the calculation part,
the manufacturing side computer further comprising the edging information acquisition part,
wherein based on request side information, manufacturing side information, environment information transmitted from the environment information acquisition part, and lens deformation information transmitted from the lens deformation information acquisition part, edging information is transmitted to the edging information acquisition part after being calculated by the calculation part.

4. The system of any one of claims 1 to 3, wherein a plurality of the request side computers are provided.

5. A spectacle lens manufacturing device, comprising:
an edger installed at a manufacturing side of a spectacle lens;
an edging information acquisition part configured to acquire edging information calculated in consideration of a lens deformation amount between a case when a spectacle lens is present in an ordering side environment and a case when a spectacle lens is present in a manufacturing side environment, based on request side information such as spectacle lens information, frame information, prescription value information, and ordering side area information for requesting to manufacture the spectacle lens, and manufacturing side information of a spectacle lens including edger information, environment information such as environment information at an ordering side of the spectacle lens and such as environment information at a manufacturing side of the spectacle lens, and lens deformation information regarding a deformation of a lens according to an environment,
wherein the spectacle lens is manufactured by the edger under a manufacturing side environment so that the spectacle lens is fitted into a frame even under an ordering side environment, in accordance with edging information transmitted to the edger from the edging information acquisition part,
wherein the request side of manufacturing a spectacle lens, refers to the ordering side of a spectacle lens, which is a prime contractor when manufacture of the spectacle lens is requested to a subcontractor by the prime contractor who receives an order of the spectacle lens, or refers to the subcontractor when manufacture of the spectacle lens is requested to further another subcontractor by the subcontractor.

6. A manufacturing method of a spectacle lens, for manufacturing a spectacle lens by an edger under a manufacturing side environment, so that the spectacle lens is fitted into a frame even under an ordering side environment, according to edging information calculated in consideration of a lens deformation amount between a case when a spectacle lens is present in an ordering side environment and a case when a spectacle lens is present in a manufacturing side environment, based on request side information such as spectacle lens information, frame information, prescription value information, and ordering side area information for requesting to manufacture the spectacle lens, and manufacturing side information of a spectacle lens including edger information, environment information such as environment information at an ordering side of the spectacle lens and such as environment information at a manufacturing side of the spectacle lens, and lens deformation information regarding a deformation of a lens according to an environment,
wherein the request side of manufacturing a spectacle lens, refers to the ordering side of a spectacle lens, which is a prime contractor when manufacture of the spectacle lens is requested to a subcontractor by the prime contractor who receives an order of the spectacle lens, or refers to the subcontractor when manufacture of the spectacle lens is requested to further another subcontractor by the subcontractor.

7. A manufacturing information management system of a spectacle lens, comprising:
an edging information acquisition part configured to acquire edging information calculated in consideration of a lens deformation amount between a case when a spectacle lens is present in an ordering side environment and a case when a spectacle lens is present in a manufacturing side environment, based on request side information such as spectacle lens information, frame information, prescription value information, and ordering side area information for requesting to manufacture the spectacle lens, and manufacturing side information of a spectacle lens including edger information, environment information such as environment information at an ordering side of the spectacle lens and such as environment information at a manufacturing side of the spectacle lens, and lens deformation information regarding a deformation of a lens according to an environment; and
an intermediary side transmission part configured to transmit to outside edging information acquired by the edging information acquisition part,
wherein the request side of manufacturing a spectacle lens, refers to the ordering side of a spectacle lens, which is a prime contractor when manufacture of the spectacle lens is requested to a subcontractor by the prime contractor who receives an order of the spectacle lens, or refers to the subcontractor when manufacture of the spectacle lens is requested to further another subcontractor by the subcontractor.

8. A manufacturing information management device of a spectacle lens, comprising:
an edging information acquisition part configured to acquire edging information calculated in consideration of a lens deformation amount between a case when a spectacle lens is present in an ordering side environment and a case when a spectacle lens is present in a manufacturing side environment, based on request side information such as spectacle lens information, frame information, prescription value information, and ordering side area information for requesting to manufacture the spectacle lens, and manufacturing side information of a spectacle lens including edger information, environment information such as environment information at an ordering side of the spectacle lens and such as environment information at a manufacturing side of the spectacle lens, and lens deformation information regarding a deformation of a lens according to an environment; and
an intermediary side transmission part configured to transmit to outside edging information acquired by the edging information acquisition part,
wherein the request side of manufacturing a spectacle lens, refers to the ordering side of a spectacle lens, which is a prime contractor when manufacture of the spectacle lens is requested to a subcontractor by the prime contractor who receives an order of the spectacle lens, or refers to the subcontractor when manufacture of the spectacle lens is requested to further another subcontractor by the subcontractor.

9. A manufacturing information management method of a spectacle lens, for transmitting to outside edging information calculated in consideration of a lens deformation amount between a case when a spectacle lens is present in an ordering side environment and a case when a spectacle lens is present in a manufacturing side environment, based on request side information such as spectacle lens information, frame information, prescription value information, and ordering side area information for requesting to manufacture the spectacle lens, and manufacturing side information of a spectacle lens including edger information, environment information such as environment information at an ordering side of the spectacle lens and such as environment information at a manufacturing side of the spectacle lens, and lens deformation information regarding a deformation of a lens according to an environment,
wherein the request side of manufacturing a spectacle lens, refers to the ordering side of a spectacle lens, which is a prime contractor when manufacture of the spectacle lens is requested to a subcontractor by the prime contractor who receives an order of the spectacle lens, or refers to the subcontractor when manufacture of the spectacle lens is requested to further another subcontractor by the subcontractor.
